# EUROPÄISCHE PATENTSCHRIFT

(11) **EP 2 551 059 B1**
(45) Veröffentlichungstag und Bekanntmachung des Hinweises auf die Patenterteilung: **04.01.2017**
(21) Anmeldenummer: 12172863.8
(22) Anmeldetag: 21.06.2012
(51) Int. Cl.: B25D 11/06, H02K 33/00

(54) **Handwerkzeugmaschine mit Dreipunktlagerung**
Hand-held machine tool with three-point bearing
Machine-outil manuelle avec une assise à trois points

(30) Priorität: 26.07.2011 DE 102011079828
(43) Veröffentlichungstag der Anmeldung: 30.01.2013
(73) Patentinhaber: HILTI Aktiengesellschaft, 9494 Schaan (LI)
(72) Erfinder: Binder, Albert, 9470 Buchs (CH); Sander, Bernhard, 81379 München (DE); Duggan, Sarah, Sheffield, S6 2NR (GB); Clark, Richard, Sheffield, S6 2 PH (GB)
(74) Vertreter: Hilti Aktiengesellschaft Corporate Intellectual Property

(56) Entgegenhaltungen:
- EP-A2- 2 036 680
- CH-A- 172 143
- DE-A1- 10 332 521
- DE-B- 1 106 707
- DE-B- 1 109 109

## Beschreibung

### Technisches Gebiet

Die Erfindung betrifft eine Handwerkzeugmaschine gemäß dem Oberbegriff des Anspruchs 1, insbesondere eine meißelnde Handwerkzeugmaschine.

Eine solche Handwerkzeugmaschine ist aus der DE 10 2007 000 488 A1 benannt. ,

### Stand der Technik

Aus der Offenlegungsschrift DE 10 2007 000 488 A1 ist eine Handwerkzeugmaschine mit mittels eines Linearmotors angetriebenen pneumatischen Schlagwerks bekannt. Der Linearmotor hat einen Stator und einen Läufer. Der Läufer ist mechanisch starr mit dem Erregerkolben verbunden. Der Läufer des Linearmotors ist gabelförmig und hat zwei Stäbe, von denen jeder in zwei entlang einer Bewegungsachse des Läufers hintereinander angeordneten Luftspalten des Stators unmittelbar flächig gelagert sind. Die beiden Luftspalte im Kern des Stators bestehen jeweils aus zwei zueinander parallelen Teil-Luftspalten, die beide flächig ausgestaltet sind. Der Erregerkolben ist in einem Hohlzylinder des Schlagwerks längs einer Achse geführt. Die beiden Stäbe des Läufers sind in den beiden Luftspalten -also an vier Teil-Luftspalten gegen den Stator- unmittelbar flächig gelagert. Demnach hat die vorbekannte Handwerkzeugmaschine eine Lagereinrichtung, die eine Läuferlagerung in Gestalt der vier flächigen Teil-Luftspalte zum längsbeweglichen Lagern des Läufers und eine Erregerkolbenlagerung in Gestalt eines Hohlzylinders zum Lagern des Erregerkolbens aufweist. Bei der vorbekannten Handwerkzeugmaschine müssen der Läufer und der Stator sehr genau aufeinander abgestimmt hergestellt werden, wobei insbesondere das Einpassen der Mechanik, insbesondere der Luftspalte, vergleichsweise aufwendig ist. Bei Einpassungsfehlern oder bei einer anwendungsbedingten Fehländerung der Passung besteht eine erhöhte Gefahr, dass ein Läufer in den Luftspalten unsauber oder mit erhöhtem Widerstand geführt oder gar verkantet wird.

Wünschenswert ist es grundsätzlich, bei vertretbaren Fertigungstoleranzen eine möglichst reibungsfreie und dennoch sichere Lagerung des Läufers sicherzustellen.

### Darstellung der Erfindung

An dieser Stelle setzt die Erfindung an, deren Aufgabe es ist, eine Handwerkzeugmaschine mit einer einfacher gestalteten und dennoch verlässlichen Lagereinrichtung zum Lagern des Läufers anzugeben. Insbesondere soll die Lagereinrichtung gegenüber dem Stand der Technik verbessert sein und in der Fertigung einfacher herstellbar sein.

Diese Aufgabe wird durch die Erfindung mittels einer Handwerkzeugmaschine gemäß dem Anspruch 1 gelöst. Die erfindungsgemäße Handwerkzeugmaschine weist auf:
- einen Linearmotor mit einem Läufer,
- einen mechanisch an den Läufer starr gekoppelten Erregerkolben, und
- einer Lagereinrichtung mit einer Läuferlagerung zum längsbeweglichen Lagern des Läufers und mit einer Erregerkolbenlagerung zum längsbeweglichen Lagern des Erregerkolbens. Erfindungsgemäss ist darüber hinaus vorgesehen, dass die Läuferlagerung ein erstes Lager und ein zweites Lager aufweist, die den Läufer auf einander gegenüberliegenden Seiten lagern, wobei die Läuferlagerung ein Schwenken des Läufers zusammen mit dem Erregerkolben um die wenigstens eine zur Bewegungsachse quer liegende Achse ermöglicht, und die Erregerkolbenlagerung ein drittes Lager mit einer Längsführung entlang einer Bewegungsachse für den Erregerkolben aufweist.

Die Erfindung geht von der Überlegung aus, dass bei der vorbekannten Handwerkzeugmaschine bereits die Lagerung des Läufers des Linearmotors mehrfach überbestimmt ist, nämlich durch die vier flächigen Teil-Luftspalten, was im Ergebnis ein aufwendiges Einpassen dieser Lagerstellen erfordert. Soll ein aufwendiges Einpassen vermieden werden, bestünde zum einen die Möglichkeit, die Fertigungstoleranzen sehr gering ausfallen zu lassen, was aber zu einer vergleichsweise teuren Handwerkzeugmaschine führen würde. Eine andere Möglichkeit wäre es, Fehlpositionen des Läufers in der Lagereinrichtung hinzunehmen. Allerdings ergibt sich in diesem Fall eine durch Reibkräfte verursachte nicht unerhebliche Wärmeentwicklung, was sich letztlich negativ auf die Lebensdauer auswirken würde. Die Erfindung geht davon aus, dass beide Ansätze nachteilig sind.

Die Erfindung hat erkannt, dass eine Läuferlagerung mit einem ersten Lager und einem zweiten Lager, die den Läufer auf einander gegenüberliegenden Seiten lagern, sowie eine die Erregerkolbenlagerung grundsätzlich vorteilhaft ist. Ein drittes Lager der Erregerkolbenlagerung sieht dabei eine Längsführung entlang einer Bewegungsachse für den Erregerkolben vor.

Ein solches System einer Lagereinrichtung ist nicht überbestimmt, da durch drei Lager eindeutig festgelegt. Gemäß dem Konzept der Erfindung wird demnach die Baugruppe aus Erregerkolben und Läufer gesamthaft betrachtet und eine Lagereinrichtung vorgesehen, die eine statisch bestimmte, jedoch nicht überbestimmte Lagerung für die Baugruppe aus Erregerkolben und Läufer bietet. Im Rahmen einer besonders vorteilhaften Weiterbildung bilden die Läuferlagerung und die Erregerkolbenlagerung mit einem ersten, zweiten und dritten Lager idealisiert eine Dreipunktlagerung.

Darüberhinaus erlaubt die Läuferlagerung erfindungsgemäss ein Schwenken des Läufers zusammen mit dem Erregerkolben um die wenigstens eine zur Bewegungsachse quer liegende Achse. Dies verschafft zudem einen Freiheitsgrad in der Bewegung des Läufers, der bei Arbeitsbetätigung als auch bei einer Assemblierung des Läufers in der Läuferlagerung vorteilhaft sein kann.

Insbesondere ist eine Schwenkmöglichkeit des Läufers in seiner Amplitude beschränkt; so ist eine verlässliche und dabei nicht überbestimmte Lagerung des Läufers gewährleistet. Vorzugsweise umfasst das erste Lagerteil den Läufer seitlich und auf einer Ober- und Unterseite des Läufers. Dadurch ist der Läufer besonders sicher gelagert. Insbesondere ist der Läufer mit Spiel gelagert, um eine ausreichend widerstandsarme Längsbewegung des Läufers in dem ersten und zweiten Lager zu erlauben.

Weitere vorteilhafte Weiterbildungen der Erfindung sind in den Unteransprüchen angegeben . Eine besonders vorteilhafte Weiterbildung der Erfindung geht davon aus, dass ein direkt im Stator gehaltener und geführter Läufer des Standes der Technik hinsichtlich seiner Lagerung noch verbessert werden kann. Die Erfindung geht von der Überlegung aus, dass es vorteilhaft ist, eine längsbewegliche Führung des Läufers einerseits und eine Halterung des Läufers am Motor oder Gehäuse separat zu berücksichtigen.

Dementsprechend sieht die Weiterbildung vor, dass das erste und das zweite Lager jeweils
- ein erstes Lagerteil aufweist, das den Läufer, insbesondere seitlich und auf einer Ober- und Unterseite, umgreift, und
- ein zweites Lagerteil aufweist, in dem das erste Lagerteil entlang wenigstens einer zur Bewegungsachse quer liegenden Achse beweglich ist, vorzugsweise begrenzt beweglich gehalten ist.

Mittels dem ersten Lagerteil ist der Läufer in vorteilhaft angepasster Weise geführt. Mittels dem zweiten Lagerteil ist das den Läufer führende erste Lagerteil entlang wenigstens einer zur Bewegungsachse quer liegenden Achse in vorteilhafter Weise begrenzt beweglich gehalten.

Bevorzugt ist die Lagereinrichtung in der Handwerkzeugmaschine zum Lagern des Läufers in einer Bewegungsachse eines Werkzeuges der Handwerkzeugmaschine positioniert.

Erfindungsgemäß bilden die Läuferlagerung und die Erregerkolbenlagerung vorzugsweise eine Dreipunktlagerung. Dieser Bindung ist eine Dreipunktlagerung zum Lagern einer Baugruppe umfassend einen Läufer und einen daran mechanisch starr gekoppelten Erregerkolben vorgesehen. In Abkehr von der Lagereinrichtung gemäß dem Stand der Technik sind gemäss dem Konzept der Erfindung zum Lagern des Läufers eine Läuferlagerung und eine Erregerkolbenlagerung vorgesehen, die eine Dreipunktlagerung bilden. Mit besonderem Vorteil versehen bildet die Dreipunktlagerung die einzige Lagerung für den Läufer und den Erregerkolben.

Vorteilhaft weist die Läuferlagerung einen vergleichsweise sehr geringen Lagerflächen- oder Lagerlinienanteil im Vergleich zur Gesamtfläche der Baugruppe auf. Vorteilhaft weist die Erregerkolbenlagerung einen vergleichsweise sehr geringen Lagerflächen- oder Lagerlinienanteil im Vergleich zur Gesamtfläche der Baugruppe auf. Demnach kann die Läuferlagerung und Erregerkolbenlagerung für die Baugruppe wenigstens näherungsweise als Dreipunktlagerung beschrieben werden.

Die Erfindung hat erkannt, dass sich die genannten Nachteile aufgrund einer überbestimmten Lagerung für einen Läufer ergeben und sich durch einen mechanisch an den Läufer angekoppelten Erregerkolben noch verstärken. Dies ist darauf zurückzuführen, dass der Erregerkolben auch Führungsfunktionen übernimmt und dadurch sogenannte Zwangskräfte in Lagerstellen für den Linearmotor einleiten kann. Bisher konnten derartige Zwangskräfte nur durch sehr geringe Fertigungstoleranzen, also durch ein sehr genaues Einpassen der Lagerstellen, oder durch elastische Zwischenelemente, wie beispielsweise eine so genannte Pendelstütze, vermieden werden. Dies führt jedoch zu einem vergleichsweise teuren Herstellungsverfahren für die Handwerkzeugmaschine.

Die Lagereinrichtung nutzt der Handwerkzeugmaschine den Erregerkolben als Führung. Die Baugruppe aus Erregerkolben und Läufer ist dann in drei Punkten gelagert, wobei zwei Lagerpunkte für den Läufer vorgesehen sind und ein Lagerpunkt durch den in einem Hohlzylinder gelagerten Erregerkolben selbst realisiert ist. Damit ist die Lagereinrichtung statisch bestimmt, aber nicht überbestimmt. Daher entstehen beim Betrieb des Linearmotors der Handwerkzeugmaschine keine unnötigen Zwangskräfte und/oder Zwangsmomente und es ist ferner kein aufwändiges Einpassen notwendig. Zudem sind die Reibungskräfte vergleichsweise gering, so dass sich beim Betrieb der Handwerkzeugmaschine vergleichsweise wenig Wärme aufgrund von Reibungskräften entwickelt, was sich im Ergebnis positiv auf den Wirkungsgrad und auf die Lebensdauer der Handwerkzeugmaschine auswirkt.

Erfindungsgemäß bildet die Lagereinrichtung mit der Läuferlagerung und der Erregerkolbenlagerung die Dreipunktlagerung als einzige Lagerung, durch zwei einander gegenüberliegenden Lagerpunkte für den Läufer und einen Lagerpunkt für den Erregerkolben. Der Erregerkolben ist umfänglich bündig in einem Hohlzylinder eines pneumatischen Schlagwerks eingepasst und in dem Hohlzylinder längs einer Arbeitsachse durch den Hohlzylinder geführt beweglich sein. Der Erregerkolben treibt über eine Luftfeder einen ebenfalls in dem Hohlzylinder angeordneten Schlagkolben an. Der Erregerkolben und der Hohlzylinder bilden einen weiteren Lagerpunkt. Die beiden Lagerpunkte für den Läufer können beispielsweise flächige Aussparungen sein, in die der Läufer eingreift.

Besonders vorzugsweise ist das erste und zweite Lager separat von einem Stator des Linearmotors gebildet. Jeweils das zweite Lagerteil ist bevorzugt am Linearmotor, z. B. am Stator befestigt und/oder am Gehäuse gehalten.

Bei einer besonders bevorzugten weiterbildenden Variante weist die Läuferlagerung zum Lagern des Läufers einen mit einer Kalotte befestigten kugelförmigen Körper auf. Der kugelförmige Körper ist in der Handwerkzeugmaschine über wenigstens eine Kalotte befestigt. Aufgrund der Kugelform werden zwischen dem kugelförmigen Körper und der Kalotte praktisch keine Momente übertragen, sondern allenfalls Kräfte. Damit ist die Läuferlagerung in besonders verbesserter Weise statisch bestimmt, aber nicht überbestimmt. Die Kalotte ist zum Befestigen des kugelförmigen Körpers innerhalb des Gehäuses der Handwerkzeugmaschine gelagert.

Beispielsweise weist der kugelförmige Körper eine Nut auf, in die der Läufer eingreifen kann. Diese Nut ist bevorzugt durch eine flächige Aussparung in dem kugelförmigen Körper gebildet, welche bevorzugt in etwa parallel zu einer Querschnittsfläche, vorzugsweise praktisch um eine Äquatorialfläche des kugelförmigen Körpers herum, liegt.

Damit werden Kräfte und Momente zwischen dem Läufer und dem kugelförmigen Körper über diese Nut übertragen. Der kugelförmige Körper überträgt auf die Kalotte jedoch lediglich Kräfte und keine Momente, was sich günstig auf die gesamte Lagerung auswirkt. Die Nut selbst hat einen vergleichsweise sehr geringen Lagerflächen- oder Lagerlinienanteil im Vergleich zur Gesamtfläche der Baugruppe.

Beim Herstellen des kugelförmigen Körpers kann eine Auswölbung, beispielsweise in Gestalt einer Spanstelle oder eines Angusszapfens oder eines Auswurfansatzes entstehen. In einer bevorzugten weiterbildenden Variante weist die Kalotte der Läuferlagerung eine Aussparung zum Umfassen einer solchen Auswölbung des kugelförmigen Körpers auf. Eine solche Aussparung kann durch eine Durchgangsbohrung oder durch eine Sackbohrung realisiert werden. Die genannte Aussparung hat den Vorteil, dass die oben genannte Auswölbung am kugelförmigen Körper nicht aufwendig entfernt werden muss, sondern endgültig ggfs. mit wenig aufwändiger Bearbeitung im Fertigungsprozess am kugelförmigen Körper belassen werden kann; insbesondere später beim Anbringen der Kalotte in die Aussparung leicht aufgenommen wird.

Um ein Verdrehen oder ein Verkippen zwischen dem kugelförmigen Körper und der Kalottte zu ermöglichen, ist die Aussparung in der Kalotte bevorzugt derart ausgestaltet, dass sie ein größeres Volumen als das der Auswölbung umfassen kann.

Gemäß einer weiteren bevorzugten weiterbildenden Variante weist die Läuferlagerung zum Vorspannen der Kalotte gegen den kugelförmigen Körper eine Federanordnung, insbesondere eine Tellerfeder, auf. Die Federanordnung kann einseitig vorgesehen sein. Es bedarf somit nur weniger Teile für die Federanordnung, was den Teileverschleiß sowie die Komplexität der Läuferlagerung herabsetzt.

Im Rahmen einer besonders hinsichtlich der Verlässlichkeit noch weiter verbesserten Weiterbildung kann eine weitere Kalotte vorgesehen sein. Dies ermöglicht eine besonders sichere Befestigung der Läuferlagerung. Es können zwei Federn vorgesehen sein, die beide Kalotten gegen den kugelförmigen Körper spannen.

Im Rahmen einer weiteren bevorzugten konstruktiven Weiterbildung ist der Läufer des Linearmotors der Handwerkzeugmaschine spatförmig. D. h. der Läufer weist bevorzugt einen rechteckförmigen Querschnitt sowie einen rechteckförmigen Längsschnitt auf, sowie eine insgesamt flache Struktur. Dieser spatförmige Läufer greift bevorzugt selbst in die Nut des kugelförmigen Körpers ein.

Die mechanische Kopplung zwischen dem Läufer und dem Erregerkolben ist starr beispielsweise durch ein starren Stab ausgebildet. Die Erregerkolbenlagerung weist einen Hohlzylinder auf, dessen Hohlraum ausgestaltet ist, den Erregerkolben zu lagern. Dabei werden Momente zwischen dem Erregerkolben und dem Stab nicht abgestützt, da eine solche Erregerkolbenlagerung ähnlich wie ein Kugelgelenk wirkt.

Insbesondere ist der Erregerkolben in axialer Richtung vergleichsweise kurz ausgeführt und weist bevorzugt eine tonnenförmige Aussenkontur auf. Eine Abmessung des Erregerkolbens längs einer Arbeitsachse des pneumatischen Schlagwerks ist beispielsweise geringer als 50 % des Durchmessers des Erregerkolbens. Insbesondere ist eine Abmessung des Erregerkolbens längs einer Arbeitsachse wesentlich kürzer als die starre Verbindung zwischen Erregerkolben und Läufer.

Beispielsweise kann eine Zylindermantelfläche mit einem in dieser angeordneten Dichtring vorgesehen sein. Insbesondere kann der Dichtring, beispielsweise in Gestalt eines O-Rings, gebildet sein. Zweckmäßigerweise kann der Dichtring aus der Mantelfläche hinausragen und mit der Innenfläche des Hohlzylinders in Kontakt ist.

In einer bevorzugten Weiterbildung weist die Läuferlagerung einen ersten kugelförmigen Körper, der über erste, insbesondere über zwei, Kalotten in der Handwerkzeugmaschine befestigt ist, und einen zweiten kugelförmigen Körper, der über zweite, insbesondere über zwei, Kalotten in der Handwerkzeugmaschine befestigt ist, auf. Diese beiden kugelförmigen Körper sind bevorzugt gegenüber voneinander angeordnet.

Zweckmäßigerweise weist der erste kugelförmige Körper eine erste Nut und der zweite kugelförmige Körper eine zweite Nut auf, wobei der Läufer -bevorzugt spatförmig- in die erste Nut und in die zweite Nut eingreift. Demnach liegen die erste Nut und die zweite Nut bevorzugt in einer Ebene, die eine Läuferbewegungsachse umfasst.

Besonders bevorzugt ist die Lagereinrichtung in der Handwerkzeugmaschine für ein Lagern des Läufers in einer Bewegungsachse eines Werkzeuges positioniert, welches über eine mechanische Transmission von dem Erregerkolben angetrieben wird. Dies führt zu einem besonders kompakten Aufbau der Handwerkzeugmaschine mit einem hohen Wirkungsgrad.

Die Handwerkzeugmaschine besitzt ein elektropneumatisches Schlagwerk, das vom Läufer angetrieben ist. Beispielsweise ist die Handwerkzeugmaschine ein Bohrhammer oder eine meißelnde Handwerkzeugmaschine.

### Ausführungsbeispiele

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Die Zeichnungen zeigen in schematischer Darstellung:
- Fig.1:: ein Ausführungsbeispiel einer Handwerkzeugmaschine mit einem einen Läufer aufweisenden Linearmotor, einem Erregerkolben und einer Lagereinrichtung;
- Fig. 2:: ein Ausführungsbeispiel einer Lagereinrichtung mit einer Läuferlagerung und einer Erregerkolbenlagerung;
- Fig. 3:: ein Ausführungsbeispiel der Erregerkolbenlagerung;
- Fig. 4:: ein Ausführungsbeispiel der Läuferlagerung.

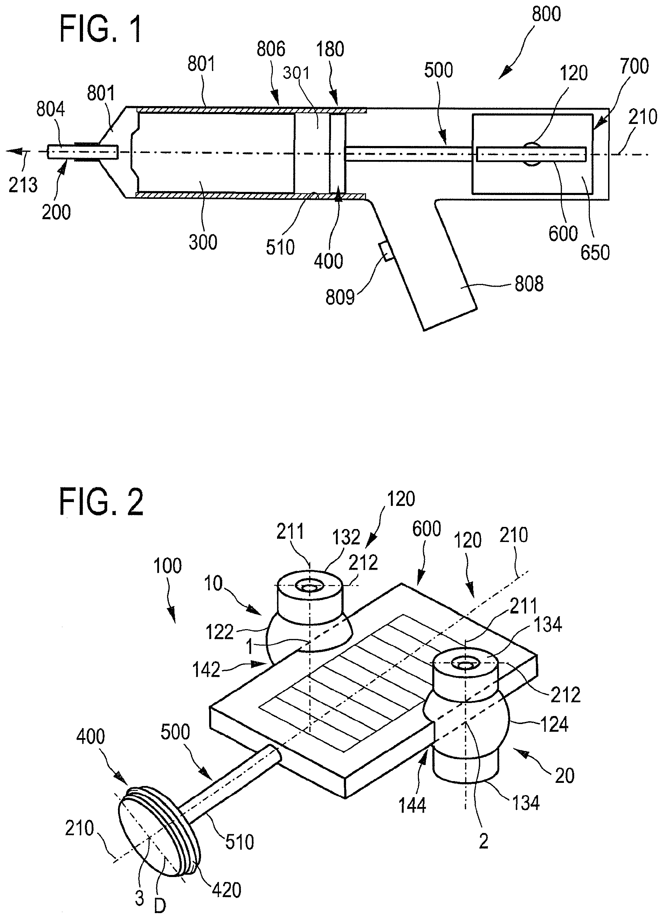

Fig. 1 zeigt schematisch als Beispiel eine meißelnde Handwerkzeugmaschine 800. Die Handwerkzeugmaschine 800 hat ein Gehäuse 801 mit einer Werkzeugaufnahme 802, in welche ein Schaftende 803 eines Werkzeugs 200, z. B. mit einem des Meißel 804, eingesetzt werden kann. Einen primären Antrieb der Handwerkzeugmaschine 800 bildet ein Linearmotor 700, welcher ein pneumatisches Schlagwerk 806 antreibt. Ein Anwender kann die Handwerkzeugmaschine 800 mittels eines Handgriffs 808 führen und mittels eines Systemschalters 809 in Betrieb nehmen. Im Betrieb treibt die Handwerkzeugmaschine 800 den Meißel 804 kontinuierlich längs einer Bewegungsachse 210 in Schlagrichtung 213 in einen Untergrund.

Das Schlagwerk 806 hat einen Erreger --hier in Form eines Erregerkolbens 400-- und einen Schläger --hier in Form eines Schlagkolbens 300--, die in einem Führungsrohr 510 einer Erregerkolbenlagerung 180 des Schlagwerks 806 längs der Bewegungsachse 210 beweglich geführt sind. Der Erregerkolben 400 ist über eine mechanischen Kopplung 500 in Form eines Stabs an den Linearmotor 700 angekoppelt und zu einer periodischen, linearen Bewegung gezwungen. Eine Luftfeder --gebildet durch eine pneumatische Kammer 301-- zwischen Erreger und Schläger koppelt eine Bewegung des Schlägers an die Bewegung des Erregers an. Vorliegend kann der Schlagkolben 300 direkt auf ein hinteres Ende des Werkzeugs 200 aufschlagen oder mittelbar über einen im Wesentlichen ruhenden Zwischenschläger einen Teil seines Impulses, hierauf den Meißel 804, übertragen.

Fig. 2 zeigt in schematischer Darstellung ein Ausführungsbeispiel einer Lagereinrichtung 100 mit einer Läuferlagerung 120.

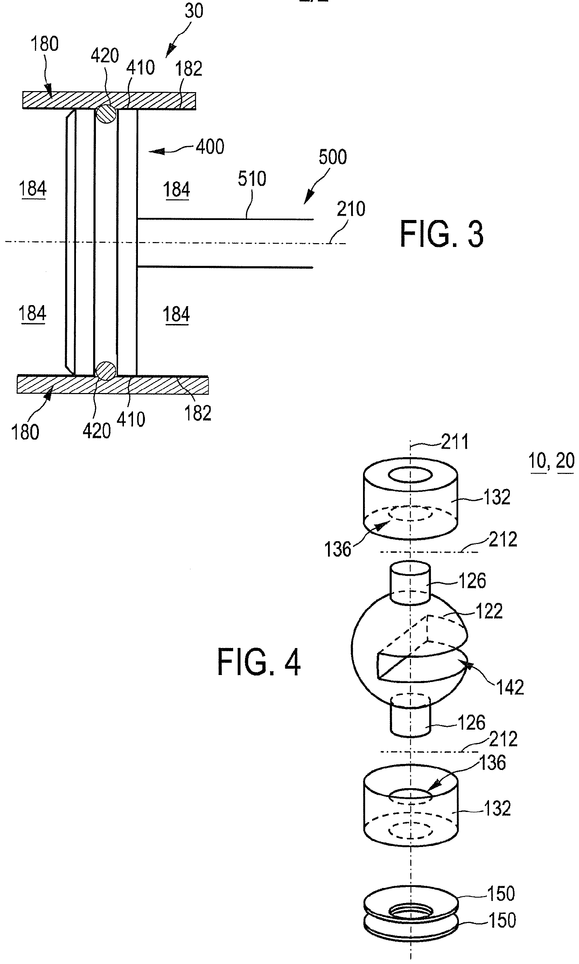

Fig. 4 zeigt ein erstes und zweites Lager 10, 20 der Läuferlagerung 120 detailliert in einer Explosionsdarstellung und auf diese wird ergänzend Bezug genommen.

Aus Fig. 3 ist in detaillierter Ansicht die zur Lagereinrichtung 100 gehörende Erregerkolbenlagerung 180 ersichtlich.

Zum Lagern eines Läufers 600 eines Linearmotors 700 ist die Lagereinrichtung 100 gemäß dem Konzept der Erfindung in einer Handwerkzeugmaschine 800 --beispielsweise in der Art eines in Fig. 1 schematisch dargestellten Ausführungsbeispiels-- integriert. Der Läufer 600, das Führungsrohr 510 und der Erregerkolben 400 sind in einer Bewegungsachse 210 gelagert, entlang der sich ein Werkzeug 200 der Handwerkzeugmaschine 800 bewegen kann.

Die Lagereinrichtung 100 gemäß Fig. 2 bildet mit ihrer zweiteiligen -- ein erstes und zweites Lager 10, 20 aufweisenden-- Läuferlagerung 120 und ihrer --ein drittes Lager 30 aufweisenden-- Erregerkolbenlagerung 180 eine bestimmte, jedoch nicht überbestimmte Dreipunktlagerung. Die Lagereinrichtung 100 lagert somit die Baugruppe aus über eine mechanische Kopplung 500 verbundenem Erregerkolben 400 und Läufer 600; anders ausgedrückt ist die Baugruppe aus Erregerkolben 400 und Läufer 600 gesamthaft gelagert; nicht etwa der Erregerkolben 400 und Läufer 600 separat voneinander gelagert. Im Folgenden werden die drei idealisierten --durch das erste zweite und dritte Lager 10, 20, 30 gebildeten-- Lagerpunkte der Dreipunktlagerung näher erläutert. Dabei wird insbesondere die Details der Fig.3 und Fig.4 Bezug genommen.

Der Erregerkolben 400 hat eine tonnenförmige Aussenkontur und ist in einer Erregerkolbenlagerung 180 mit einem Führungsrohr 510 in Gestalt eines Hohlzylinders 182 gelagert. Der Erregerkolben 400 kann entlang des Hohlraumes 184 des Hohlzylinders 182 entlang gleiten. Dazu weist der Erregerkolben eine Zylindermantelfläche 410 mit einem in dieser angeordneten Dichtring 420, beispielsweise einen O-Ring, auf. Der Erregerkolben 400 weist eine Zylindermantelfläche 410 auf, die --vermittelt über den Dichtring 420-- luftdicht an einer Innenseite des Hohlzylinder 182 führbar ist.

Der Erregerkolben 400 ist über eine Stange der mechanischen Kopplung 500 im Führungsrohr 510 mechanisch an den spatförmigen Läufer 600 gekoppelt. Der spatförmige Läufer 600 ist in zwei ersten Lagerteilen geführt, die vorliegend als zwei kugelförmige Körper 122, 124 gebildet sind. Der Läufer 600 liegt dazu in zwei Nuten 142, 144 der zwei kugelförmigen Körpern 122, 124. Die kugelförmigen Körper 122, 124 bilden insofern im Bereich ihrer Nuten 142, 144 zwei der drei Lagerpunkte der Lagereinrichtung 100.

Zweckmässigerweise ist jede Nut 142, 144 im kugelförmigen Körper 122, 124 derart dimensioniert, dass eine Flächenpressung zwischen dem Läufer 600 und dem kugelförmigen Körper 122, 124 ein vorgegebenes Maximum nicht überschreitet. Im Ergebnis kann die Lagereinrichtung 100 der Handwerkzeugmaschine 800 hinsichtlich einer vorgegebenen Betriebszeit dimensioniert werden. Demnach können in Abhängigkeit von Kräften zwischen Läufer 600 und Läuferlagerung die Größen der Flächen in der Nut 142, 144 sehr unterschiedlich ausfallen. Durch die Flächen der Nut 142, 144 im kugelförmigen Körper 122, 124 wird vorliegend der minimale Durchmesser des kugelförmigen Körpers 122, 124 mitbestimmt. Die Abmessungen einer im Folgenden erläuterten Kalotte 132, 134 sind darauf abgestimmt.

Bei der Fertigung der kugelförmigen Körper 122, 124 können Auswölbungen 126 entstehen, beispielsweise in Gestalt von Spanstellen bei einer spanenden Fertigung oder in Gestalt eines Angusszapfens oder eines Auswurfansatzes bei einem Spritzgussherstellungsverfahren. Deswegen weisen die beiden ersten Kalotten 132 eine Aussparung 136 auf, die diese Auswölbungen 126 umfassen.

Jedes der zwei ersten Lagerteile ist damit in jeweils zwei zweiten Lagerteilen begrenzt beweglich gehalten; und zwar vorliegend begrenzt beweglich entlang wenigstens einer ersten quer zur Bewegungsachse 210 liegenden Achse 211 und auch entlang wenigstens einer zweiten --anderen-- quer zur Bewegungsachse 210 liegenden Achse 212. Die Bewegungsachse 210 und die quer liegenden Achsen 211, 212 bilden vorliegend ein kartesisches Koordinatensystem. Die zwei zweiten Lagerteile sind vorliegend über jeweils zwei Kalotten 132, 134 in dem Stator 650 des Linearmotors 700 befestigt.

Gemäss dem schematisch in Fig. 4 dargestellten Aufbau einer Läuferlagerung 120 ist der Läufer 600 in einer Mittelposition des kugelförmigen Körpers 122 mit der ersten Nut 142 und einer Mittelposition des kugelförmigen Körpers 124 mit der zweiten Nut 144 längsbeweglich geführt. Insofern entsprechen die idealisierten Punkte der Dreipunktlagerung den Lagerpunkten 1, 2, 3. Den dritten Lagerpunkt 3 markiert dabei in etwa ein Schwerpunkt des Erregerkolbens 400 -- hier ein Kreuzungspunkt der Bewegungsachse 210 mit einem Durchmesser D des Erregerkolbens 400 quer zur Bewegungsachse 210.

Aufgrund der Kugelform werden zwischen dem ersten kugelförmigen Körper 122 und den ersten Kalotten 132 keine Momente, sondern allenfalls Kräfte übertragen. Um eine Vorspannung der ersten Kalotten 132 gegen den ersten kugelförmigen Körper 122 zu erwirken, sind bei dem in Fig. 4 dargestellten Ausführungsbeispiel Tellerfedern 150 vorgesehen. Die Tellerfedern 150 spannen vorliegend einseitig --in einer hier nicht dargestellten Ausführungsform zweiseitig-- die ersten Kalotten 132 gegen den ersten kugelförmigen Körper 122. Das erste und zweite Lager 10, 20 sind hier ähnlich, vorliegend gespiegelt, gebildet, sodass Fig. 4 für beide gilt.

## Patentansprüche

1. Handwerkzeugmaschine (800) aufweisend:
- einen Linearmotor (700) mit einem Läufer (600),
- einem Schlagwerk (806), das ein Führungsrohr (510), einen mechanisch an den Läufer (600) starr gekoppelten Erregerkolben (400), einen Schläger (300), eine Luftfeder zwischen Erregerkolben (400) und Schläger (300) zum Ankoppeln einer Bewegung des Schlägers (300) an eine Bewegung des Erregerkolbens (400) aufweist und
- einer Lagereinrichtung (100) mit einer Läuferlagerung (120) zum längsbeweglichen Lagern des Läufers (600) und mit einer Erregerkolbenlagerung (180) in dem Führungsrohr (510) zum längsbeweglichen Lagern des Erregerkolbens (400), wobei die Erregerkolbenlagerung (180) ein drittes Lager (30) mit einer Längsführung entlang einer Bewegungsachse (210) für den Erregerkolben (400) aufweist, **dadurch gekennzeichnet, dass**
- die Läuferlagerung (120) ein erstes Lager (10) und ein zweites Lager (20) aufweist, die den Läufer (600) auf einander gegenüberliegenden Seiten lagern, wobei die Läuferlagerung (120) ein begrenztes Schwenken des Läufers (600) zusammen mit dem Erregerkolben (400) um die wenigstens eine zur Bewegungsachse (210) quer liegende Achse (2111, 212) ermöglicht.

2. Handwerkzeugmaschine (800) nach Anspruch 1, **dadurch gekennzeichnet, dass** das erste und das zweite Lager (10, 20) jeweils ein erstes Lagerteil aufweist, das den Läufer (600) seitlich und auf einer Ober- und Unterseite umfasst, und ein zweites Lagerteil aufweist, in dem das erste Lagerteil entlang wenigstens einer zur Bewegungsachse (210) quer liegenden Achse (211, 212) begrenzt beweglich gehalten ist.

3. Handwerkzeugmaschine (800) nach Anspruch 1 oder 2, **dadurch gekennzeichnet, dass** das erste und zweite Lager (10, 20) separat von einem Stator (650) des Linearmotors (700) gebildet ist.

4. Handwerkzeugmaschine (800) nach einem der Ansprüche 1 bis 3, **dadurch gekennzeichnet, dass** die Läuferlagerung (120) und die Erregerkolbenlagerung (180) mit dem ersten, zweiten und dritten Lager (10, 20, 30) eine Dreipunktlagerung bilden.

5. Handwerkzeugmaschine (800) nach einem der Ansprüche 1 bis 4, **dadurch gekennzeichnet, dass** das erste, zweite und dritte Lager (10, 20, 30) der Läuferlagerung (120) und der Erregerkolbenlagerung (180) die einzige Lagerung für den Läufer (600) und den Erregerkolben (400) bilden.

6. Handwerkzeugmaschine (800) nach einem der Ansprüche 1 bis 5, **dadurch gekennzeichnet, dass** zwei einander gegenüberliegende Lagerpunkte einer Dreipunktlagerung mittels dem ersten und zweiten Lager (10, 20) für den Läufer (600) und ein dritter Lagerpunkt der Dreipunktlagerung mittels dem dritten Lager (30) für den Erregerkolben (400) gebildet ist.

7. Handwerkzeugmaschine (800) nach einem der Ansprüche 1 bis 6, **dadurch gekennzeichnet, dass** das erste und zweite Lager (10, 20) der Läuferlagerung (120) zum Lagern des Läufers (600) jeweils ein in Form einer Kalotte (132, 134) gebildetes zweites Lagerteil aufweist, in dem ein erstes Lagerteil in Form eines kugelförmigen Körpers (122, 124) begrenzt beweglich ist.

8. Handwerkzeugmaschine (800) nach einem der Ansprüche 1 bis 7, **dadurch gekennzeichnet, dass** ein kugelförmiger Körper (122, 124) des ersten und/oder zweiten Lagers (10, 20) eine Nut (142,144) aufweist, in die der Läufer (600) eingreift.

9. Handwerkzeugmaschine (800) nach einem der Ansprüche 1 bis 8, **dadurch gekennzeichnet, dass** eine Kalotte (132, 134) des ersten und/oder zweiten Lagers (10, 20) eine Aussparung (136) zum Umfassen einer Auswölbung (126) eines kugelförmigen Körpers (122, 124) des ersten und/oder zweiten Lagers (10, 20) aufweist.

10. Handwerkzeugmaschine (800) nach Anspruch 9, **dadurch gekennzeichnet, dass** die Aussparung (136) ausgestaltet ist, ein größeres Volumen zu umfassen als das der Auswölbung (126).

11. Handwerkzeugmaschine (800) nach einem der Ansprüche 1 bis 10, **dadurch gekennzeichnet, dass** die Läuferlagerung (120) zum Vorspannen einer Kalotte (132, 134) gegen einen kugelförmigen Körper (122, 124) eine Federanordnung (150), insbesondere eine Tellerfeder, aufweist.

12. Handwerkzeugmaschine (800) nach einem der vorstehenden Ansprüche, **dadurch gekennzeichnet, dass** das erste Lager (10) der Läuferfagerung (120) einen ersten kugelförmigen Körper (122) aufweist, der über eine erste oberseitige und eine erste unterseitige Kalotte (132), begrenzt beweglich in der Handwerkzeugmaschine (800) befestigt ist, und das zweite Lager (10) der Läuferlagerung (120) einen zweiten kugelförmigen Körper (124) aufweist, der über eine zweite oberseitige und eine zweite unterseitige Kalotte (134) begrenzt beweglich in der Handwerkzeugmaschine (800) befestigt ist.

13. Handwerkzeugmaschine (800) nach Anspruch 12, **dadurch gekennzeichnet, dass** der erste kugelförmige Körper (122) eine erste Nut (142) und der zweite kugelförmige Körper (124) eine zweite Nut (144) aufweist, wobei der Läufer (600) in die erste Nut (142) und in die zweite Nut (144) eingreift.

14. Handwerkzeugmaschine (800) nach einem der vorstehenden Ansprüche, **dadurch gekennzeichnet, dass** das dritte Lager (30) der Erregerkolbenlagerung (180) einen längs der Bewegungsachse (210) ausgerichteten Hohlzylinder (182) aufweist, dessen Hohlraum (184) ausgestaltet ist, den Erregerkolben (400) längsbeweglich zu lagern und der Erregerkolben (400) eine Zylindermantelfläche (410) aufweist, wobei die Zylindermantelfläche (410) luftdicht an einer Innenseite des Hohlzylinder (182) führbar ist.

15. Handwerkzeugmaschine (800) nach Anspruch 14, **dadurch gekennzeichnet, dass** in der Zylindermantelfläche (410) ein Dichtring (420) angeordnet ist.

## Claims

1. Hand-held power tool (800) comprising:
- a linear motor (700) with a rotor (600),
- a striking mechanism (806) having a guide tube (510), an exciter piston (400) mechanically rigidly coupled to the rotor (600), a striker (300), an air spring between the exciter piston (400) and the striker (300) for coupling a movement of the striker (300) to a movement of the exciter piston (400) and
- a bearing device (100) with a rotor bearing arrangement (120) for supporting the rotor (600) in a longitudinally movable manner and with an exciter piston bearing arrangement (180) in the guide tube (510) for supporting the exciter piston (400) in a longitudinally movable manner, wherein the exciter piston bearing arrangement (180) has a third bearing (30) with a longitudinal guide along an axis of motion (210) for the exciter piston (400), **characterised in that**
- the rotor bearing arrangement (120) has a first bearing (10) and a second bearing (20) supporting the rotor (600) on opposing sides, wherein the rotor bearing arrangement (120) allows for limited pivoting of the rotor (600) together with the exciter piston (400) about the at least one axis (211, 212) lying transversely to the axis of motion (210).

2. Hand-held power tool (800) according to claim 1, **characterised in that** the first and the second bearings (10, 20) each have a first bearing part embracing the rotor (600) laterally and on a top and bottom side and a second bearing part in which the first bearing part is held in such a manner that it can move to a limited extent along at least one axis (211, 212) lying transversely to the axis of motion (210).

3. Hand-held power tool (800) according to claim 1 or claim 2, **characterised in that** the first and second bearings (10, 20) are formed separately from a stator (650) of the linear motor (700).

4. Hand-held power tool (800) according to one of claims 1 to 3, **characterised in that** the rotor bearing arrangement (120) and the exciter piston bearing
arrangement (180) form a three-point bearing arrangement together with the first, second and third bearings (10, 20, 30).

5. Hand-held power tool (800) according to one of claims 1 to 4, **characterised in that** the first, second and third bearings (10, 20, 30) of the rotor bearing arrangement (120) and of the exciter piston arrangement (180) form the single bearing arrangement for the rotor (600) and the exciter piston (400).

6. Hand-held power tool (800) according to one of claims 1 to 5, **characterised in that** two opposing bearing points of a three-point bearing arrangement are formed by means of the first and second bearings (10, 20) for the rotor (600) and a third bearing point of the three-point bearing arrangement is formed by means of the third bearing (30) for the exciter piston (400).

7. Hand-held power tool (800) according to one of claims 1 to 6, **characterised in that** the first and second bearings (10, 20) of the rotor bearing arrangement (120) each have a second bearing part in the form of a spherical cap (132, 134) for supporting the rotor (600), in which a first bearing part in the form of a spherical body (122, 124) can move to a limited extent.

8. Hand-held power tool (800) according to one of claims 1 to 7, **characterised in that** a spherical body (122, 124) of the first and/or second bearing (10, 20) has a groove (142, 144) in which the rotor (600) engages.

9. Hand-held power tool (800) according to one of claims 1 to 8, **characterised in that** a spherical cap (132, 134) of the first and/or second bearing (10, 20) has a recess (136) for embracing a protuberance (126) on a spherical body (122, 124) of the first and/or second bearing (10, 20).

10. Hand-held power tool (800) according claim 9, **characterised in that** the recess (136) is designed to embrace a greater volume than that of the protuberance (126).

11. Hand-held power tool (800) according to one of claims 1 to 10, **characterised in that** the rotor bearing arrangement (120) has a spring arrangement (150), in particular a disc spring, for pre-tensioning a spherical cap (132, 134) relative to a spherical body (122, 124).

12. Hand-held power tool (800) according to one of the preceding claims, **characterised in that** the first bearing (10) of the rotor bearing arrangement (120) has a first spherical body (122) fastened in the hand-held power tool (800) in such a manner that it can move to a limited extent via a first spherical cap (132) on the top side and a first spherical cap (132) on the bottom side, and the second bearing (10) of the rotor bearing arrangement (120) has a second spherical body (124) fastened in the hand-held power tool (800) in such a manner that it can move to a limited extent via a second spherical cap (134) on the top side and a second spherical cap (134) on the bottom side.

13. Hand-held power tool (800) according to claim 12, **characterised in that** the first spherical body (122) has a first groove (142) and the second spherical body (124) has a second groove (144), wherein the rotor (600) engages in the first groove (142) and in the second groove (144).

14. Hand-held power tool (800) according to one of the preceding claims, **characterised in that** the third bearing (30) of the exciter piston bearing arrangement (180) has a hollow cylinder (182) aligned along the axis of motion (210), the hollow space (184) of which is designed to support the exciter piston (400) in a longitudinally movable manner, and the exciter piston (400) has a cylindrical surface (410), wherein the cylindrical surface (410) can be guided in an airtight manner on an inner side of the hollow cylinder (182).

15. Hand-held power tool (800) according to claim 14, **characterised in that** a sealing ring (420) is arranged in the cylindrical surface (410).

## Revendications

1. Machine-outil manuelle (800) comportant :
- un moteur linéaire (700) ayant un rotor (600) ,
- un mécanisme de percussion (806) comportant un tube de guidage (510), un piston excitateur (400) rigidement et mécaniquement couplé au rotor (600), un percuteur (300), un ressort pneumatique entre le piston excitateur (400) et le percuteur (300) pour coupler un mouvement du percuteur (300) à un mouvement du piston excitateur (400) et
- un dispositif à palier (100) ayant un palier de rotor (120) pour supporter le rotor (600) de manière longitudinalement mobile et un palier de piston excitateur (180) dans le tube de guidage (510) pour supporter le piston excitateur (400) de manière longitudinalement mobile, dans lequel le palier de piston excitateur (180) comporte un troisième palier (30) avec un guide longitudinal le long d'un axe de déplacement (210) pour le piston excitateur (400), **caractérisée en ce que**
- le palier de rotor (120) comporte un premier palier (10) et un deuxième palier (20) qui supportent le rotor (600) sur deux côtés opposés l'un à l'autre, dans lequel le palier de rotor (120) permet un pivotement limité du rotor (600) en association avec le piston excitateur (400) autour du au moins un axe (211, 212) transversal à l'axe de déplacement (210).

2. Machine-outil manuelle (800) selon la revendication 1, **caractérisée en ce que** le premier palier et le deuxième palier (10, 20) comportent respectivement une première partie de palier qui comporte le rotor (600) latéralement et sur un côté supérieur et un côté inférieur, et une seconde partie de palier dans laquelle la première partie de palier est maintenue de manière à avoir un mouvement limité le long d'au moins un axe (211, 212) transversal à l'axe de déplacement (210).

3. Machine-outil manuelle (800) selon la revendication 1 ou 2, **caractérisée en ce que** les premier et deuxième paliers (10, 20) sont formés séparément d'un stator (650) du moteur linéaire (700).

4. Machine-outil manuelle (800) selon l'une des revendications 1 à 3, **caractérisée en ce que** le palier de rotor (120) et le palier de piston excitateur (180) forment un support à trois points d'appui avec les premier, deuxième et troisième paliers (10, 20, 30).

5. Machine-outil manuelle (800) selon l'une des revendications 1 à 4, **caractérisée en ce que** les premier, deuxième et troisième paliers (10, 20, 30) du palier de rotor (120) et du palier de piston exciteur (180) forment le seul palier pour le rotor (600) et le piston excitateur (400).

6. Machine-outil manuelle (800) selon l'une des revendications 1 à 5, **caractérisée en ce que** deux points d'appui opposés l'un à l'autre d'un support à trois points d'appui sont formés au moyen des premier et deuxième paliers (10, 20) pour le rotor (600) et un troisième point d'appui du support à trois points d'appui est formé au moyen du troisième palier (30) pour le piston excitateur (400).

7. Machine-outil manuelle (800) selon l'une des revendications 1 à 6, **caractérisée en ce que** les premier et deuxième paliers (10, 20) du palier de rotor (120) comportent respectivement une seconde partie de palier ayant la forme d'une calotte (132, 134) pour le support du rotor (600), dans laquelle une première partie de palier ayant la forme d'un corps sphérique (122, 124) peut se déplacer de manière limitée.

8. Machine-outil manuelle (800) selon l'une des revendications 1 à 7, **caractérisée en ce qu'**un corps sphérique (122, 124) du premier et/ou deuxième palier (10, 20) comporte une rainure (142, 144) dans laquelle le rotor (600) s'engage.

9. Machine-outil manuelle (800) selon l'une des revendications 1 à 8, **caractérisée en ce qu'**une calotte (132, 134) du premier et/ou deuxième palier (10, 20) comporte un évidement (136) pour contenir une saillie (126) d'un corps sphérique (122, 124) du premier et/ou deuxième palier (10, 20).

10. Machine-outil manuelle (800) selon la revendication 9, **caractérisée en ce que** l'évidement (136) est conçu pour contenir un volume plus grand que la saillie (126).

11. Machine-outil manuelle (800) selon l'une des revendications 1 à 10, **caractérisée en ce que** le palier de rotor (120) comporte un agencement à ressort (150), en particulier un ressort Belleville, pour pré-charger une calotte (132, 134) contre un corps sphérique (122, 124).

12. Machine-outil manuelle (800) selon l'une des revendications précédentes, **caractérisée en ce que** le premier palier (10) du palier de rotor (120) comporte un premier corps sphérique (122) qui est fixé dans la machine-outil manuelle (800) de manière à pouvoir se déplacer de manière limitée par l'intermédiaire d'une première calotte supérieure et d'une première calotte inférieure (132), et le deuxième palier (10) du palier de rotor (120) comporte un second corps sphérique (124) qui est fixé dans la machine-outil manuelle (800) de manière à pouvoir se déplacer de manière limitée par l'intermédiaire d'une seconde calotte supérieure et d'une seconde calotte inférieure (134).

13. Machine-outil manuelle (800) selon la revendication 12, **caractérisée en ce que** le premier corps sphérique (122) comporte une première rainure (142) et le second corps sphérique (124) comporte une seconde rainure (144), dans laquelle le rotor (600) s'engage dans la première rainure (142) et dans la seconde rainure (144).

14. Machine-outil manuelle (800) selon l'une des revendications précédentes, **caractérisée en ce que** le troisième palier (30) du palier de piston excitateur (180) comporte un cylindre creux (182) aligné le long de l'axe de déplacement (210), dont la cavité (184) est conçue pour supporter le piston excitateur (400) de manière longitudinalement mobile, et le piston excitateur (400) comporte une surface d'enveloppe de cylindre (410), dans laquelle la surface d'enveloppe de cylindre (410) peut être guidée de manière étanche à l'air sur un côté intérieur du cylindre creux (182).

15. Machine-outil manuelle (800) selon la revendication 14, **caractérisée en ce qu'**une bague d'étanchéité (420) est agencée dans la surface d'enveloppe de cylindre (410).
